# EUROPEAN PATENT APPLICATION

(11) **EP 3 316 548 A1**
(43) Date of publication of application: **02.05.2018**
(21) Application number: 17196997.5
(22) Date of filing: 18.10.2017
(51) Int. Cl.: H04L 29/06, H04M 3/493, H04M 3/51, H04M 3/54

(54) **SYSTEM AND METHOD FOR SWITCHING FROM A CALL ON A VOICE COMMUNICATING CHANNEL TO WEB BASED SELF-SERVICES**

(30) Priority: 25.10.2016 US 201615333768
(71) Applicant: Al-Khaja, Ali Hassan, Manama (BH)
(72) Inventor: Al-Khaja, Ali Hassan, Manama (BH)
(74) Representative: Karakatsanis, Georgios

(57) **Abstract**

A method and system for processing calls and scheduling return calls, appointments and/or reservations. The system transmits a message to a caller upon termination of the call. The message can include a link or hyperlink which directs the caller to an online form or website for downloading a mobile app. The online form, website or mobile app provides the caller with an alternate way of communicating a service provider and/or scheduling return calls, appointments and/or reservations with the service provider at a time that is convenient for the caller.

## Description

### FIELD OF THE INVENTION

The present invention relates to a system and method that enables service providers to offer clients an option of switching from a voice communication channel to web based self-service channels.

### BACKGROUND OF THE INVENTION

A number of methods and systems are known for processing a call from a caller such that the call can be queued when a call recipient is unavailable and virtual interaction with the caller can be automatically initiated. A method, system and computer program is known for processing a call from a caller when a call recipient is unavailable by using an IP (Internet Protocol)-based user-interactive approach. The method includes queuing the call in a queue associated with a call center. During the call, the caller's messaging preferences are obtained, and which may include the availability of the caller to receive IP-based messages. Following receipt of the messaging preferences, the call is disconnected and then IP-based messages are generated and transmitted to the caller according to the caller's messaging preferences to begin a virtual interaction between the caller and the call center. Although the known methods and systems may be useful for scheduling a call back from an agent, the IP-based messages do not provide links to online booking forms or mobile applications nor do they allow for scheduling appointments for one or more return calls using the online booking form or mobile applications.

### SUMMARY OF THE INVENTION

Wherefore, it is an object of the present invention to provide a system and method that enables a service provider to offer their caller/customers with options to switch from voice communicating channels/systems, such as call-centers for example, to web based self-services templates and pages through dedicated web links to the information and/or services required. The links being delivered to the caller/customer via SMS text messages or other communication systems such as email, mobile "apps" or the like. The system and method facilitates processing calls and enabling the caller to switch from the voice call to web based self-service means for scheduling a return call, appointment and/or reservation at the convenience of the caller, i.e., some time after the initial call has been terminated. Although the method enables a caller to schedule a return call, appointment and/or reservation, it is to be understood that these features are merely a sample of the functions enabled by the inventive system and method.

Another object of the present invention is to present a system and method for service centers to shift customer care from high cost calls to web-based self-care. The system integrates an Interactive Voice Response (IVR) system that allows callers to elect to receive relevant information and care via the mobile web. When selected by the caller, an SMS text message and/or email is used to send the caller instant links to access the specific information they need. The links can also be used to engage the caller with general mobile self- services, sales promotions, call back requests, and bookings, event registration, promotional app downloads, competitions and any other of a variety of additional services. The system and method of the present invention can help to: reduce the pressure on the call centers during long wait times; reduce customer frustration, and provide the customers with control over the call back time; simplify and speed up the use of a relevant mobile web interface; and provide the caller with an opportunity to be directed to self-care FAQs or marketing promotions.

Yet, another object of the present invention is to present a method and system for processing calls and scheduling return calls, appointments and/or reservations with a service provider, e.g. a call center. When an incoming call is placed to a service provided, the service provider replies to the telephone call with a voice message in the case no agents are available and offers two options for scheduling a return, either by providing a hyperlink to a web form or by providing a link to a computer program such as an application for a mobile device. The method for establishing a communication between a caller and a service provider includes the service provider replying to a telephone call with a voice message in the case that no service agents are available. The caller may then be provided with the option to receive a message from the service provider. If this option is accepted by the caller, the service provider can send a message, e.g. a Short Message Service (SMS) text message, to the caller. The message provides a link to an online booking form or to a location for downloading a computer program for a mobile device. Such a computer programs for mobile devices are commonly knows as "mobile apps." The caller schedules an appointment with the provider by using the online booking form or app. With the online booking form or app, the caller can provide information regarding the purpose of the call or the subject of the call. If the caller provides information regarding the call, a scheduling system can be operated by the service provider to direct the call to a suitable agent, based on the subject of the call for example. The online booking form or app can facilitate scheduling additional calls, calling the call center, or leaving the call center a voice recording. The online booking form or app can also allow access to alternative services such as reserving a table at a restaurant or purchasing of tickets for an event.

Another object of the present invention is to provide a method and system for processing calls and scheduling return calls, appointments and/or reservations which transmits a message to the caller upon termination of the call. The message comprises a link or hyperlink which directs the caller to an online booking form or website for downloading a mobile app, thus enabling the caller to provide scheduling information at a time that safe and convenient. This enables the caller to consult his/her calender when scheduling a return call, appointment and/or reservation.

A further object of the invention is to provide a method and system for facilitating and developing personalized interactions with a caller, e.g., customer as specified by the caller during an initial call to the service provider. It has recently been found that customers are increasingly looking at online alternatives for contacting service providers when they need help. It has also been determined that customers are more satisfied by using a mobile device associated with their account for help. Customers who use a mobile phone or tablet to resolve issues with service providers are satisfied in a shorted amount of time in comparison to customers using a desktop or laptop. With this in mind, when the caller places a call to a service provider, the system will offer the caller an option of receiving a message sent to their mobile device that directs the caller to the most relevant information as specified by the caller during the initial call. The caller is able to indicate the reason for and/or nature of the initial call and given the option of having a return message sent directly to their mobile device. The return message will generally include a link or hyperlink which will direct the caller to a web page or form that is best suited to the services indicated by the caller during the initial telephone call.

The present invention relates to a method that enables service providers to offer clients the option of switching from a voice communication channel to a web based self-service channel. The method includes receiving and routing an initial call from the caller to the service provider on the voice communication channel with an incoming call router. The initial call is received in a communication server which provides the client with an option, by way of the communication server, to switch from the voice communication channel to the web based self-service channel. Once command for switching to the web based self-service channel is received from the client, via the voice communication channel, the initial call is disconnected so as to end communication between the client and the service provider. Subsequently an electronic message is transmitted from an IP/media messenger unit, via a web access device, to the client. The electronic message includes a hyperlink to the web based self-service channel. Access to the web based self-service channel via the web access device is initiated when the client activates the hyperlink in the electronic message.

The present invention also relates to a system for processing calls and scheduling at least one of a return call, an appointment and a reservation. The system comprises an incoming call router that is communicatively connected with at least one of a telephone network and an internet protocol network for receiving an incoming call from a caller. The incoming call router is communicatively connected to at least one workstation which is operated by an agent for receiving the incoming call from the incoming call router. A communication server is communicatively connected to the incoming call router and the communication server has interactive voice response capabilities to facilitate interactive communication between the caller and the system. The incoming call router directs incoming calls to the workstation when the workstation is available to receive the incoming call, and to the communication server when the workstation is unavailable to receive the incoming call. An internet protocol/media messenger unit is communicatively connected to the communication server and the telephone network and/or the internet protocol network. The internet protocol/media messenger unit transmits messages, via the telephone network and/or the internet protocol network, to the caller based on the interactive communication between the caller and the system. The messages comprise a link which can be actuated to direct the caller to a mobile application website having a communication application. The communication application facilitates the transmission of further communication from the caller to the internet protocol/media messenger unit. A scheduling registry is communicatively connected to the internet protocol/media messenger unit. The scheduling registry schedules the return call, the appointment and/or the reservation based on the further communication transmitted to the internet protocol/media messenger unit. The scheduling registry is communicatively connected to the workstation so as to notify the agent of the schedule for the return call, the appointment and/or the reservation.

### BRIEF DESCRIPTION OF THE DRAWINGS

The accompanying drawings, which are incorporated in and constitute a part of the specification, illustrate various embodiments of the invention and together with the general description of the invention given above and the detailed description of the drawings given below, serve to explain the principles of the invention. The invention will now be described, by way of example, with reference to the accompanying drawings in which:
Fig. 1 is a block diagram of a system for processing calls and scheduling a return call, appointment and/or reservation according to the present invention;
Fig. 1A is block diagram of an alternative system for processing calls and scheduling a return call, appointment and/or reservation according to the present invention;
Fig. 1B is block diagram of yet another alternative system for processing calls and scheduling a return call, appointment and/or reservation according to the present invention;
Fig. 2 is a flowchart of a method for processing calls and scheduling a return call, appointment and/or reservation according to the present invention
Fig. 3A-3C illustrate a practical example of how the system and method can be applied to help callers schedule a call back using a template; and
Fig. 4 illustrates a practical example of how the system and method can be applied to inform callers of promotional offers.

It should be understood that the drawings are not necessarily to scale and that the disclosed embodiments are sometimes illustrated diagrammatical and in partial views. In certain instances, details which are not necessary for an understanding of this disclosure or which render other details difficult to perceive may have been omitted. It should be understood, of course, that this disclosure is not limited to the particular embodiments illustrated herein.

### DETAILED DESCRIPTION OF THE PREFERRED EMBODIMENTS

The present invention will be understood by reference to the following detailed description, which should be read in conjunction with the appended drawings. It is to be appreciated that the following detailed description of various embodiments is by way of example only and is not meant to limit, in any way, the scope of the present invention.

In the description of the system for processing calls and scheduling return calls, the term "caller" refers to a person who places a call to a service provider. The service provider should be understood being a business, company, organization or other such entity that offers or provides one or more services. The term "agent" on the other hand refers to a representative of the service provider and is the recipient of the caller placed by the caller.

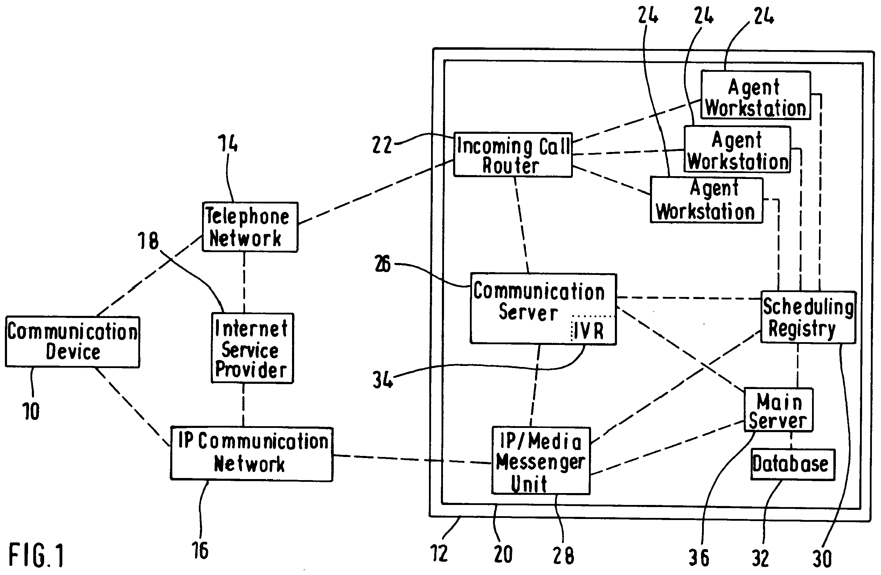

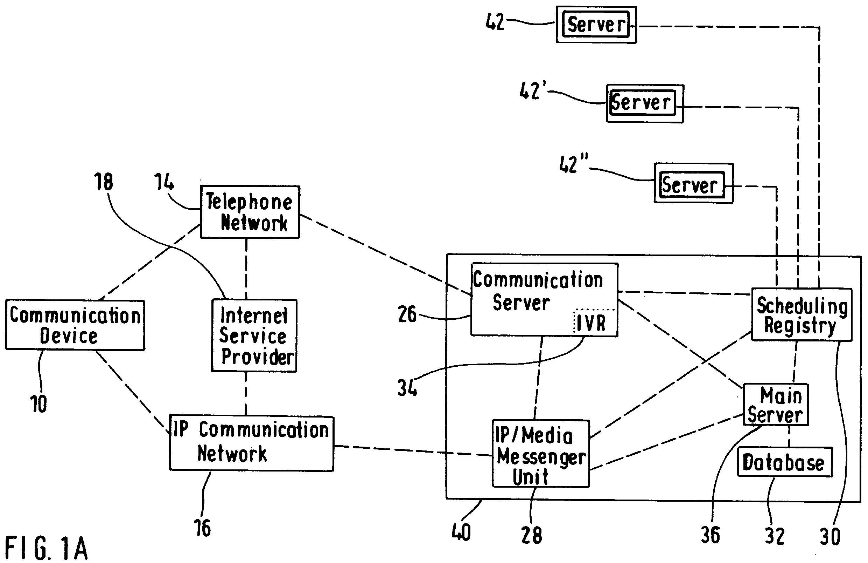

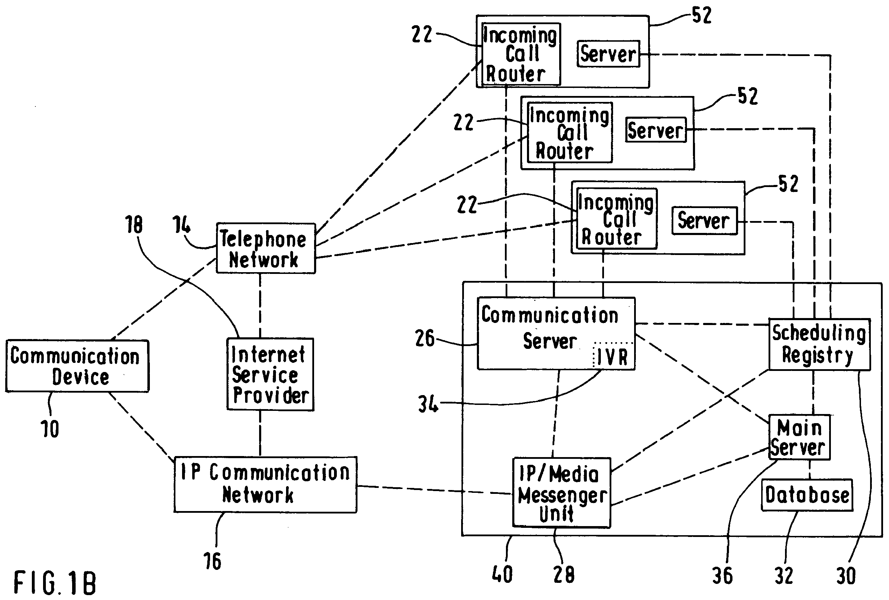

Turning now to Fig. 1, a brief description concerning the various components of the present invention will now be briefly discussed. As can be seen in this embodiment, the caller has a communication device 10 which the caller uses to communicate or place a call to the service provider 12. The communication device 10 is capable of communicating with telephone networks 14 and/or Internet Protocol (IP) communications networks 16 which generally communicate with each other by way of an Internet Service Provider (ISP) 18 or the like. The system for processing calls and scheduling return calls with a service provider 12 which generally includes a call center 20 or location having the facilities to receive, answer, and return calls and/or communications made by consumers of the particular service. Such call centers include a incoming call router 22 which receives and distributes incoming calls to agent workstations 24 when agents are available for receiving a call. A number of incoming call routers are known to transmit incoming calls to communications servers 26 when no agent is available to receive the incoming call. Each of the agent workstations 24 has a computer which is used to record, track and access information, for example during the call from the caller 10. The communication server 26 may include an Interactive Voice Response (IVR) system 34 which allows callers to interact/communicate with the service provider's call center 20 via a telephone keypad or by way of speech recognition technology. The service provider call center 20 also has an IP/media messenger unit 28, a scheduling registry 30 and a Customer Relationship Management (CRM) database 32, which includes a storage device or memory unit and with which information and data can be stored. It is to be understood that all of the components of the service provider call center 20 are capable of communicating with each other in known ways such that information and data can be transmitted between associated components. The components of the system for processing calls and scheduling return calls can communicate with telephone networks 14 and IP communication networks 16 such that information and data can be transmitted therebetween.

As is generally well known in the art, telephone networks 14 and IP communication networks 14 receive and transmit calls, data, and information in one form or another from one location to another location as well as between each other. For example a caller having a communication device 10 such as a cellular phone, handheld computer, personal digital assistant that can transmit and receive telephone calls and electronic messages. As such communication is well known in the art a detailed description concerning the same in not believed to be necessary. Hereinafter the communication device 10 will refer to a cellular phone having the capability of transmitting and receiving voice calls, electronic messages, IP data. The term "electronic message" should be understood as including SMS text messages, e-mail, pushed web pages, instant messages and/or any other type of IP based messages.

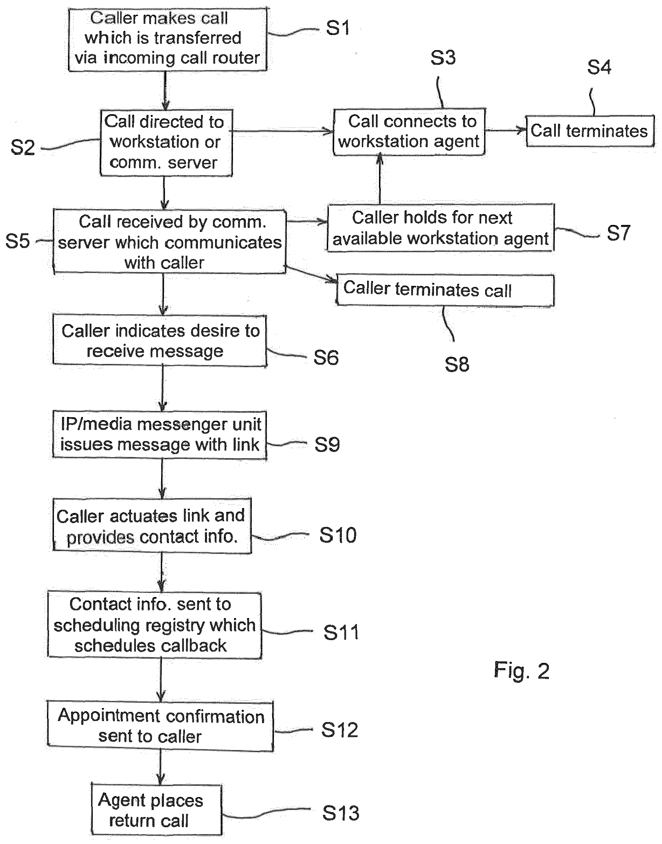

Using the communication device 10, in an initial step S1 as illustrated in Fig. 2, the user may place a call to the service provider 12 by way of the telephone network 14 which can also receive the telephone call from the IP communication network 16 via the ISP 18. The telephone network 14 transmits the call to the service provider call center 20 as an incoming call. The incoming call router 22 receives the incoming call and based on the availability of an agent workstation 24 and any other number of known criteria transmits the call accordingly. For instance in step S2, the incoming call router 22 will transfer the incoming call at step S3 to an agent workstation 24 if an agent is available to take the call, following which the call is terminated at step S4. Otherwise, if no agent is available to take the incoming call, it may be queued and transferred to the communication server 26 at step S5.

When the communication server 26 receives an incoming call from the incoming call router 22, voice messages can be generated by the IVR system 34 which provides the caller with a number of options for proceeding with the telephone call. The caller can select a desired course of action by responding to the generated voice message in a known manner, e.g., by entering a number into the communication device 10 that corresponds to the desired course of action or by vocally responding to the generated voice message.

According to one embodiment of the invention, if the incoming call cannot be answered by an agent, a voice message can be generated indicating that all of the agents are currently busy and providing the caller with a number of options for proceeding with the telephone call. The voice message can provide the caller with a course of action in which the caller can request an agent return his/her call at a later point in time, step S6. The process for this course of action will be described in more detail below. The caller may select a further course of action in which the caller is placed on hold until the next available agent can take the call, step S7. The caller can also opt to terminate the telephone call immediately at step S8. It is beneficial for the incoming call router 22 to determine, while queuing the incoming call, an expected or estimated period of time before an agent will be available to accept the incoming call. As the manner by which incoming call routers 22 queue incoming calls and determine the expected or estimated wait time are well known in the art, the same will not be discussed in greater detail. The expected or estimated wait time can be reported to the caller in the voice message generated by the IVR system 34. Knowing the expected or estimated wait time can aid the caller when deciding on a desired course of action. For example, if the expected or estimated wait time until an agent becomes available is relatively short, e.g., 5 minutes or less, the caller may desire to be placed on hold and wait for the next available agent to answer his/her incoming call. However, if the expected or estimated wait time until an agent becomes available is longer, then the caller may decide to schedule a return call from an agent.

The process of scheduling a return call from an agent, begins with the IVR system 34 generating a voice message which initially inquires whether the caller would like to schedule a return call from an agent. If this is the case, the IVR system 34 instructs the caller that an electronic message including a link or rather a hyperlink will be sent to the caller's communication device 10. If the caller desires to schedule a return call, at step S6 the caller will select this course of action in a known manner by entering, into the communication device 10, the number that corresponds to the desired course of action or by vocally responding to the generated voice message. Upon selecting this course of action, the communication server 26 will transmit a corresponding signal to the IP/media messenger unit 28. The signal can include basic information, e.g., telephone number that identifies the caller's communication device or an alternate communication device which the caller wants to use to receive the electronic message to be sent. It is to be appreciated that such basic information can be determined automatically or the caller can enter the basic information such as an alternate telephone number using the communication device 10. Upon receipt of the appropriate signal the IP/media messenger unit 28 transmits an electronic message at step S9

The electronic message sent by the IP/media messenger unit 22, via the telephone network 14 and/or IP communications network 16, to the noted communication device 10 includes a link or hyperlink which, when actuated (step S10), connects an online booking form or a website which facilitates downloading a computer program such as a mobile application or an "app". With the online booking form or the app, the caller can provide additional information and/or instructions, at step S10, which is then forwarded, via the telephone network 14 and/or IP communications network 16, to the system for processing calls and scheduling return calls. The additional information and/or instructions can include, but not limited to: a desired appointment time, i.e., the time at which an agent should call the caller back; the telephone number which the agent should use to contact the caller; a specific customer number or identifying information, such as the caller's name and address.

The additional information and/or instructions are transmitted, via the IP/media messenger unit 28, to the main server 36 and the scheduling registry 30 where it is processed. At step S11, the scheduling registry 30 schedules an appointment for a return call from an agent according to the additional information and/or instructions provided by the caller. The main server 30 can be used to analyze the additional information and/or instructions for the purpose of assigning or channeling the return call appointment to an appropriate agent or department who specializes in or are most knowledgeable of the subject matter identified by the caller as the purpose for the initial incoming call. Based on the particulars of the additional information and/or instructions and the analysis of the same, the scheduling registry 30 schedules an appointment for the appropriate agent or department to place a return call to the caller.

It is to be appreciated that the scheduling registry 30 may be able to stream or transmit times that are available for scheduling return call appointments. As the service provider agent workstations 24 are all connected to the main server 36 of the system for processing calls and scheduling return calls, the time slots or rather periods of time that are currently available for scheduling a return call can tracked and forwarded to the caller. This can help the service provider 12 to anticipate times when additional agents may be needed in order to meet the demands of return call requests.

Once the return call appointment is scheduled with the appropriate agent or department, the main server 36 has a database 32 and/or computer readable medium on which the main server 36 is able to store the additional information and/or instructions, the time of the appointment and the agent or department responsible for placing a return call to the caller.

Following scheduling and assigning the return call appointment, at step S12, the main server 36 transmits a signal to the IP/media messenger unit 28 which initiates transmission of a confirmation code online or electronic message to the caller by way of the telephone network 14 and/or IP communication network 16. The confirmation code confirms to the caller that the service provider 12 received the request for a return call and that a return call appointment has been scheduled. The confirmation code can also confirm the time that the return call was scheduled as well as the telephone number to be called by the agent. Subsequently, the workstation agent will place the return call at the scheduled time in step S13.

It is to be appreciated that the above described system for processing and scheduling need not be limited to a means for processing and scheduling return calls for a single service provider. In one variation as diagrammatically shown in Fig. 1A the online booking form or app according to the invention can enable a caller to access a number of different services in which appointments or reservations are generally beneficial or required in order to access the particular service. In this case, the caller can place a single call to a business 40 that serves a number of other businesses 42, 42', 42" by scheduling appointments or making reservations for the services provided by these local businesses 42, 42', 42". Such a scheduling/booking service provider 40 can be utilized by different local service providers 42, 42', 42" for scheduling appointments such as with doctors, lawyers, dentists, automotive repair facilities, hair care professionals, airlines, hotels or booking reservations at local service providers such as restaurants, entertainment arenas and theaters, and automobile rental agencies for example. In the following description a number of local service provider businesses 42, 42', 42" each provide a specialized service that may be different from the other local service providers however this is not necessary. As an example, one local service provider 42 can be a doctor's office at which patients can schedule office visits, other local service providers 42' can be restaurants that allow customers to reserve a table, and a further service provider 42" can be an appliance repair center that schedules appointments for repairing appliances.

By means of a scheduling/booking service provider 40, the caller can schedule appointments and/or make reservations with many local service providers 42, 42', 42" by placing a single call. Similar to the above, when the caller contacts the scheduling/booking service provider 40, the caller will be given the option, by way of the IVR system 34, to make an appointment or booking with one or more of the local service providers 42, 42', 42". Also similar to the above, the IP/media messenger unit 28 will transmit an electronic message comprising a link or a hyperlink to the caller when the caller expresses a desire to make an appointment or book a reservation. When the caller actuates the link or hyperlink in the electronic message, the caller is provided with an online booking form or an app in the manner as described above. However in contrast to the above, using the booking form or the app, the caller initially chooses which of the local service providers 42, 42', 42" he/she wants to schedule an appointment or book a reservation with. At this point, similar to the above described, the caller also can also provide additional information and/or instructions which are forwarded, via the telephone network 14 and/or IP communications network 16, to the system for processing and scheduling appointments or reservations. The additional information and/or instructions can include, but is not limited to: a desired appointment time, i.e., the time at which the caller would like to schedule the appointment; the telephone number at which the caller should be contacted; a specific customer number or identifying information, such as the caller's name and address; and any other information regarding the desired reservation, such as the number patrons for which the reservation should be made and the desired location of the table being reserved, i.e., at the back or front of the establishment.

The additional information and/or instructions are transmitted, via the IP communication network 16 and the IP/media messenger unit 28, to the main server 36 and the scheduling registry 30 where it is processed. The scheduling registry 30 schedules an appointment or books a reservation based the additional information and/or instructions provided by the caller.

It is to be appreciated that the scheduling registry 30 can have the capability of streaming ortransmitting information regarding the availability of open appointments and reservations. The scheduling registry 30 of the scheduling/booking service provider 40 can communicate with servers of the various different local service providers 42, 42', 42" such that the main server 36 can track and forward up to the minute availability of open appointments and reservations to the caller. It is also possible that main server 30 comprises seating charts and/or table arrangements so as to assist the caller in making appointments and/or reservations.

Following scheduling of the appointment or booking of the reservation, the main server 36 transmits a signal to the IP/media messenger unit 28 which initiates transmission of a confirmation code online or in the form of an electronic message to the caller by way of the telephone network 14 and/or IP communications network 16. The confirmation code confirms to the caller that the appointment has been scheduled or the reservation has been booked. The confirmation code can also confirm the particulars of the appointment or reservation, such as time and location of the appointment or reservation.

In a variation of the method of communicating with a service provider, the system as diagrammatically illustrated in Fig. 1 can provide the caller with the option of receiving an electronic message that includes a link or hyperlink to one or more dedicated online booking forms or webpages that are specific to the services requested by the caller. In the manner described above, a caller or rather customer of a service provider 12 places an initial telephone call to the service provider 12 in a known way. It is generally preferable that the caller places the initial call to the service provider 12 using a mobile communication device 10 such as a smartphone or tablet having the capability of sending/receiving electronic messages and communicating with the internet. However, the use of a communication device having such capabilities is not required for placing an initial call to a service provider 12. It is to be understood however, that using a mobile communication device 10 having the capabilities as described above is beneficial because receiving a return electronic message from the service provider and connecting to online forms and webpages by way of am IP communication network 16 via a link or hyperlink provided in the electronic message can be accomplished relatively quickly. Like the methods described above, the initial call to the service provider 12 can be transferred, via the incoming call router 22, to the communication server 26. When the incoming call is received by the communication server 26, the IVR system 34 generates a voice message which provides the caller with a number of primary options for proceeding with the telephone call. For example, the IVR system 34 can generate a voice message that enables the caller to direct the call to any one of a number of departments in the company such as a billing department, sales department, technical support department and customer service department to name a few. The caller then selects the primary option which most closely relates to the reason for his/her call to the service provider 12. The caller can select the desired primary option by responding to the IVR system 34 generated voice message in a known manner, e.g., by vocally responding to the generated voice messages or by entering a corresponding number, via the communication device, that most closely relates to the desired primary option.

Upon selecting the desired primary option, for example the billing department, the IVR system 34 can generate a further voice message which provides the caller with a number of secondary options for proceeding with the telephone call. The secondary options and corresponding voice messages thus generated will specifically relate to the selected primary option. For example, having previously selected the billing department as the primary option, the secondary options include matters related to billing and may simply include checking the amount of an outstanding bill, checking when payment of the outstanding bill is due, checking when the last payment was received, and determining where to send payment. The IVR system 34 can also generate further voice messages which present the caller with the option of requesting a call back from a specialized agent, for example an agent specifically trained in matters relating to billing. The IVR system 34 can generate voice messages which present the caller with an option of receiving an electronic message that includes a link or hyperlink to a self service mobile app, online forms or webpages that are specifically dedicated to the previously selected primary option, such as billing in the present example. Alternatively the IVR system 34 can present the caller with different options such as, for example, returning to list of primary options or learning how to register for a free upgrade.

When the caller selects the secondary option of receiving an electronic message, the communication server 26 will transmit a corresponding signal to the IP/media messenger unit 28. The signal can include basic information, e.g., telephone number that identifies the caller's communication device 10 or an alternate communication device which the caller wants to use for receiving the electronic message which will be sent. It is to be appreciated that such basic information can be determined automatically or can be entered by the caller.

Upon receipt of the corresponding signal, the IP/media messenger unit 28 will transmit an electronic message, via the telephone network 14 and/or IP communications network 16, to the noted communication device 10. In this variation of the method, the electronic message will include a link or hyperlink to one or more of: a website which facilitates downloading a self service mobile app; and online forms and webpages that are dedicated to the selected primary option. The self service mobile app and online forms and webpages can relate specifically to billing matters for example and may enable a change of billing address, payment of a bill, change of the means for paying bills, e.g., from check to credit card or may provide information regarding billing including terms of the callers contract or answers to FAQs. It is to be appreciated that number and variety of primary and secondary options available to the caller can be unlimited. The websites, mobile apps, online forms and webpages can be stored and accessed on the main server 36 in a known manner.

While the above description relates to a system and method that is utilized by communication channels/systems dedicated to and operated by an individual service provider, e.g., an "in-house" call center, it is to be appreciated that the system and method, as diagrammaticaly shown in Figs. 1A and 1B can also be utilized by a service provider 40 that facilitates or provides alternative means of communication between independent service providers 42, 42', 42", 52 and their respective customers. For example, using the inventive system and method such a communication service provider40 enables an independent service provider42, 42', 42", 52 to offer their caller/customers with options to switch from a voice communicating channel/system, e.g., call-center to web based self-services, templates and pages by delivering to the caller/customer an SMS text message or email having one or more dedicated web links to the information and/or services required. Hereinafter a service provider offering such communication options will be referred to as a "communications service provider" 40 and the one or more service providers 42, 42', 42", 52 who utilize their service shall be referred to as "independent service providers" 42, 42', 42", 52.

The system and method can be utilized by number of different independent service providers 42, 42', 42", 52 via a communications service provider 40 in such a manner that when a caller/customer places a call to a specific independent service provider 42, 42', 42", 52, if the independent service provider 52 has an incoming call router 22 and call center as discussed above (see Fig. 1B), and if none of the agents of the call center are able to accept the incoming call, it can be forwarded by the incoming call router 22 to the communications service provider 40 which will further process the original call. In contrast to the embodiment discussed above, it is also possible for the incoming call to be transferred for processing directly from an incoming call router 22 of the independent service provider 52 to the communications service provider 40 if, for example, the independent service provider 52 does not have a call center. It is also possible, as diagrammatically shown in Fig. 1A, for all incoming calls to be forwarded directly to the communication server 26 of the communications service provider 40. In any case incoming calls can be transferred to a communications service provider 40 and will then be processed by a communication server 26 including an IVR system 34 which allows callers to interact/communicate with the communications service provider 40 via a telephone keypad or by way of speech recognition technology. An IP/media messenger unit 28, scheduling registry 30 and a CRM database 32, including a storage device or memory unit communicate with each other to process the incoming calls and communicate with telephone networks 14 and IP communication networks 16 such that information and data can be transmitted therebetween.

In the manner described above, the communications service provider40 enables callers to select the option of receiving an SMS text message, e-mail, pushed web page, instant message and/or any other type of IP based message comprising links or hyperlink thereby enabling the caller to receive desired assistance using web based self-services, templates and pages.

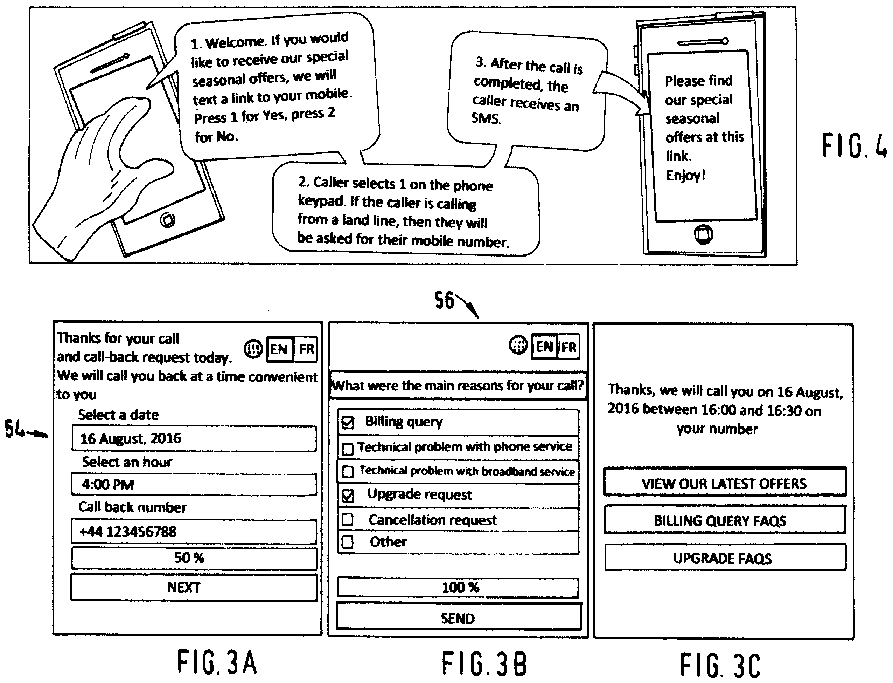

Figs. 3A, 3B, 3C generally illustrate a practical example of how the method can be applied to help callers "request a call back" using a "call back request template" such as the template shown in Fig. 3A. It should be recognized that this example can be utilized by a service provider 12 having an "in-house" call center, such as shown in Fig. 1, or by an independent service provider 42, 42', 42", 52 utilizing the services of a communications service provider 40. With the system and method of the invention the caller can skip navigating an IVR menu and simply make one selection on the keypad to request a call back. In a first step, the service provider inquires by way of the IVR system 34 whether the caller would like to request a call back from a service representative and if the caller inputs a positive response, the IVR system 34 informs the caller that they will be sent an SMS text message having a link to a web based call back request template. When the caller receives the SMS text message, they will activate the link contained within the message so as to bring up the callback request template 54. The template 54 enables the caller to select a desired date and time for a service representative to return a call. The template may also enable the caller to enter a desired phone number for the representative to use when calling back. It is to be understood that the number can also be either auto-detected (if the caller is calling from a mobile device), captured via the IVR system 34, or retrieved from the CRM database 32. In order to provide better assistance during the call back, once the call back scheduling information has been entered into the template 54, a second template 56, such as that shown in Fig. 3B, may be used to inquire regarding the main reason for calling the service provider 42, 42', 42", 52. Following the entry of all the necessary information, the system can confirm the time and date that a call back was scheduled as shown in Fig. 3C. Additionally, following scheduling of the call back, is possible to present the caller with further inquiries or options, such as viewing latest offers, billing FAQs and upgrade FAQs.

Fig. 4 generally illustrates a practical example of how the system can be used to provide callers with special "seasonal" offers. With the system and method of the invention, the IVR system can inquire if the caller would like to receive a link to a web page listing special seasonal offers. If the caller indicates a desire to receive the special offers, the caller will receive an SMS text message including a link to a dedicated web page which provides information relating to the special seasonal offers. It should be noted that, if the caller calls from a land line, the IVR will ask the caller to provide a mobile number at which the system can forward the requested SMS text message.

From the practical examples described above, it should be clear that there are numerous benefits of the inventive system and method in relation to a call back request service. Instead of waiting on hold, callers/customers can elect to request a call back at a specific time and date. The service can reduce the pressure on the service agents of a contact center during long wait times. It gives callers/customers control over the call back time thereby reducing customer frustration. Callers/customers can be provided with an easy to use mobile web interface thus enabling a quick response to their call. It also provides the service provider with an opportunity to direct the caller/customerto self-care FAQs or marketing promotions.

In a variation of the inventive system and method, in addition to receiving and processing calls including transmitting SMS text messages and managing web based services such as templates and web-pages, a communications service provider can also provide services relating to the management of the system and the services offered thereby.

In relation to the management of the inventive system and method, a communications service provider can offer independent service providers with numerous design and configuration options. The inventive system can be managed to provide independent service providers the option of using a secure browser interface to sign into the service. The independent provider can choose from one of the standard templates, or can have the communications service provider create a new one for them. The service provided by the communications service provider can allow the independent providers with the option of editing the template text and graphics, and choose from single screen and multi-screen options of templates. The independent provider can have the option of configuring their preferred theme colors and branding and can receive preferred workflow feedback by way of email, API or file-based.

The inventive system can be managed so as to enable independent service providers to send a message or invitation to a customer by just sending a message to the communications service provider API, specifying the type of message or invitation (email or SMS) to be sent and the template to use. For this, it may be necessary for the independent service provider to forward the email or mobile number of the customers who are to receive the message or invitation. Subsequently, the communications service provider by way of the system and method handles delivery of messages or invitations to customers. The customer(s) can then click on a link provided in the SMS text message and view and complete the mobile web forms. When the independent service providers and/or their customers submit data, the data can be saved by the inventive system and service in a database, and can be made available to the independent service provider, via Email, API/Web service address or exported by file (manual and automated) for further processing by the independent service provider.

When managed by a communications service provider the system and service can be integrated into workflow such that a request to send an invitation can be made by a caller/customer at any point in the workflow. For example, as part of the IVR flow, a caller/customer can be asked how they want to proceed, e.g., "press 1 to request a call back at your preferred time, press 2 to get a 10% discount on your next booking, press 3 to update your contact details press 4 to register early for our Spring User Conference in Orlando". All the independent service provider may need to supply is the client contact details (mobile number or email address). If however the user contact details are not know then the IVR system can automatically or manually capture the mobile number respectively by caller ID or IVR entry. As well as providing a service for callers, the invitations can be triggered at any stage of customer interaction including outbound calls, web requests etc.

These options made possible by the inventive system and service are beneficial for independent service providers because it provides a level of convenience for their callers/customers; reduces the amount of time callers/customers spend on hold; enables automated customer self service; reduces costs associated with customer care and engagement with callers/customers can be personalized.

It is to be understood that information captured by a communications service provider utilizing the inventive system can be made immediately available to the independent service provider for processing. Without further integration being necessary data can be forwarded by email, or downloaded in a CSV file to the independent service provider. It is also possible that depending on the application, data can be passed to the independent service provider via an API or web service for further action.

While it is understood that the inventive system and service may be utilized with land based or "wired" communications systems, it is most beneficial for the invention to be employed mobile or cellular based communication devices and systems. It has been found that mobile devices are a personal means of engagement, that is to say, when using their mobile devices, consumers are focused on the task. The inventive system and service tends to show respect for the caller's/customer's time, while at the same time developing a strategy of personalized marketing communication. The system and service enables the caller/customer to save the SMS text message and access the offer at any time convenient to them. The system and service has been found to maximize conversion rates and minimize costs per lead, since callers/customers request the information most relevant to them individually. The system and service enables richer marketing forms by replacing audio campaigns with interactive, multi-media campaigns. Callers/customers can also support a form of "organic" marketing by forwarding offers with the SMS, and sharing via social media to a wider audience.

The above discussed system, service and method comprises a number of notable features such as the IVR module which provides callers/consumers an alternate means of communication, captures mobile numbers automatically or via IVR prompt, and generates the API request to the interface. Browser administration enables modifying promotion content, including SMS invitations and on screen text, graphics and video and facilitates sending single and batch invitations by SMS. The defined API allows flexibility in initiating promotional SMS whenever desired. With the system it is possible to upload a file of mobile numbers and send a batch of SMS invitations. Adaptive screens can be optimized for mobile devices such that web based templates and pages can be designed to look good on different resolution screens. With the use of a cloud service, there is nothing to deploy in-house, as the service is a cloud solution. The system enables communications service providers with the ability offering the system and service at a variety of different prices such as pay by volume, and utilizing existing SMS gateways if preferred.

The computer readable medium as described herein can be a data storage device, or unit such as a magnetic disk, magneto-optical disk, an optical disk, or a flash drive. Further, it will be appreciated that the term "memory" herein is intended to include various types of suitable data storage media, whether permanent or temporary, such as transitory electronic memories, non-transitory computer-readable medium and/or computer-writable medium.

It will be appreciated from the above that the invention may be implemented as computer software, which may be supplied on a storage medium or via a transmission medium such as a local-area network or a wide-area network, such as the Internet. It is to be further understood that, because some of the constituent system components and method steps depicted in the accompanying Figures can be implemented in software, the actual connections between the systems components (or the process steps) may differ depending upon the manner in which the present invention is programmed. Given the teachings of the present invention provided herein, one of ordinary skill in the related art will be able to contemplate these and similar implementations or configurations of the present invention.

It is to be understood that the present invention can be implemented in various forms of hardware, software, firmware, special purpose processes, or a combination thereof. In one embodiment, the present invention can be implemented in software as an application program tangible embodied on a computer readable program storage device. The application program can be uploaded to, and executed by, a machine comprising any suitable architecture.

While various embodiments of the present invention have been described in detail, it is apparent that various modifications and alterations of those embodiments will occur to and be readily apparent to those skilled in the art. However, it is to be expressly understood that such modifications and alterations are within the scope and spirit of the present invention, as set forth in the appended claims. Further, the invention(s) described herein is capable of other embodiments and of being practiced or of being carried out in various other related ways. In addition, it is to be understood that the phraseology and terminology used herein is for the purpose of description and should not be regarded as limiting. The use of "including," "comprising," or "having," and variations thereof herein, is meant to encompass the items listed thereafter and equivalents thereof as well as additional items while only the terms "consisting of" and "consisting only of" are to be construed in a limitative sense.

The foregoing description of the embodiments of the present disclosure has been presented for the purposes of illustration and description. It is not intended to be exhaustive or to limit the present disclosure to the precise form disclosed. Many modifications and variations are possible in light of this disclosure. It is intended that the scope of the present disclosure be limited not by this detailed description, but rather by the claims appended hereto.

A number of implementations have been described. Nevertheless, it will be understood that various modifications may be made without departing from the scope of the disclosure. Although operations are depicted in the drawings in a particular order, this should not be understood as requiring that such operations be performed in the particular order shown or in sequential order, or that all illustrated operations be performed, to achieve desirable results.

## Claims

1. A method that enables service providers to offer clients an option of switching from a voice communication channel to a web based self-service channel, the method comprising:
receiving and routing an initial call from the client to the service provider on the voice communication channel with an incoming call router;
receiving the initial call in a communication server;
providing the client with an option, by way of the communication server, to switch from the voice communication channel to the web based self-service channel;
receiving a switch command from the client, via the voice communication channel, to switch to the web based self-service channel;
disconnecting the initial call to end communication between the client and the service provider;
transmitting an electronic message from an IP/media messenger unit, via a web access device, to the client, the electronic message comprising a hyperlink to the web based self-service channel; and
enabling access to the web based self-service channel via the web access device when the client activates the hyperlink in the electronic message.

2. The method according to claim 1, further comprising receiving, in the communication server, the switch command from the client, and the communication server issuing a signal to the IP/media messenger unit to initiate transmitting the electronic message to the client.

3. The method according to claim 1, further comprising facilitating communication between the client and the communication server with an interactive voice response system.

4. The method according to claim 5, further comprising obtaining messaging preferences from the client during the initial call by means of the interactive voice response system.

5. The method according to claim 1, further comprising defining the web access device as being one of a cellular phone, a handheld computer, a personal digital assistant and defining the electronic message as one or more of an SMS text message, an e-mail, a pushed web page, an instant messages and an IP-based message.

6. The method according to claim 1, further comprising directing the client, via the hyperlink, to at least one of a web-based self-service template, a web page, an online booking form and a web location for downloading a mobile app.

7. The method according to claim 6, further comprising enabling the client, via the mobile app, to at least one of:
subsequently call the service provider;
schedule an appointment with the service provider;
provide information related to the initial call;
schedule additional calls with the service provider;
leave the service provider a voice recording; and
reserve or purchase future services with the service provider.

8. The method according to claim 6, further comprising enabling the client, via at least one of the web-based self-service template, the web page and the online booking form, to at least one of:
schedule an appointment with the service provider;
provide information related to the initial call;
schedule additional calls with the service provider;
leave the service provider a voice recording; and
reserve or purchase future services with the service provider.

9. A method that enables a plurality of service providers to offer respective clients an option of switching from voice communication channels to web based self-service channels, the method comprising:
receiving initial calls that are made by the clients and transferred to the service center from the plurality of service providers via the voice communication channels, the initial calls being received in a communication server of the service center;
providing the clients with an option, by way of the communication server at the service center, to switch from the voice communication channels to the web based self-service channels;
receiving switch commands from the clients, via the voice communication channels, to switch from the voice communication channels to the web based self-service channels;
disconnecting the initial calls to end communication between the clients and the service center;
for each of the clients from which a switch command was received, transmitting an electronic message from an IP/media messenger unit of the service center, via a web access device, to the respective client, the electronic message comprising a hyperlink to the web based self-service channel; and
enabling access to the web based self-service channel via the web access device when the respective client activates the hyperlink in the electronic message.

10. A system that enables a service center to offer a client of at least one service provider an option of switching from a voice communication channel to web based self-service channels, the system comprising:
an incoming call router being communicatively connected to a communication server of the service center which receives and directs an incoming call from the client;
a communication server being communicatively connected to the incoming call router, the communication server having an interactive voice response system which facilitates interactive communication between the client and the communication server;
an IP/media messenger unit being communicatively connected to the communication server, the IP/media messenger unit transmitting an electronic message to a web access device of the client, via an IP communication network, based on the interactive communication between the client and the communication server, the at least one electronic message comprising a hyperlink which is actuatable by the client to direct the client to at least one of a web based self-service template, a web page, an online booking form and a web location for downloading a mobile app associated with the service provider; and
the at least one of the web based self-service template, the web page, the online booking form and the mobile app facilitating web based communication between the client and the service provider.

11. The system according to claim 10, wherein a plurality of independent service providers communicate with the service center, such that the incoming calls from the plurality of service providers are transferred to the communication server of the service center

12. The system according to claim 11, wherein the communication server transmits a signal to the IP/media messenger to initiate transmission of the electronic message to the client, the IP/media messenger introduces the hyperlink into the electronic message based on the specific service provider from which the respective incoming call was transmitted and based on messaging preferences communicated by the client during the initial call.

13. The system according to claim 10, wherein defining the web access device as being one of a cellular phone, a handheld computer, a personal digital assistant and the electronic message transmitted by the IP/media messenger is at least one of an SMS text message, an e-mail, a pushed web page, an instant messages and an IP-based message.
